Europäisches Patentamt

European Patent Office

Office européen des brevets

(11) Publication number: **0 152 216**
**A2**

## EUROPEAN PATENT APPLICATION

(21) Application number: 85300536.1

(22) Date of filing: 25.01.85

(51) Int. Cl.⁴: **A 01 N 37/40**
A 01 N 37/48, A 01 N 39/02
A 01 N 39/04, A 01 N 43/40
A 01 N 43/70, A 01 N 47/30

(30) Priority: 08.02.84 GB 8403342

(43) Date of publication of application:
21.08.85 Bulletin 85/34

(84) Designated Contracting States:
DE FR GB

(71) Applicant: VELSICOL CHEMICAL LIMITED
Blackfriars House 19 New Bridge Street
London, EC4 V6BY(GB)

(72) Inventor: Barlow, John North
Tufters, Main Street
Stoke Row Henley-on-Thames Oxon, RG9 5QR(GB)

(74) Representative: Taylor, Phillip Kenneth et al,
W.P. THOMPSON & CO. Coopers Building Church Street
Liverpool L1 3AB(GB)

(54) Herbicidal compositions and the selective control of weeds in cereal crops.

(57) The invention relates to herbicidal compositions characterised by a content of

A. from 30 to 150 parts by weight of 2-methoxy-3,5-dichlorobenzoic acid or an inorganic or organic salt thereof,

B. From 250 to 1,000 parts by weight of methyl 5(2,4-dichlorophenoxy)-2-nitrobenzoate, and by a content of from 250 to 2500 parts by weight of one of the following ingredients or of a mixture of two or more of the following ingredients:

C. One or more 2-aryloxy alkanoic acids or inorganic or organic salts thereof,

D. 3,5-dichloropicolinic acid or an inorganic or organic salt thereof,

E. A halogenated hydroxy benzonitrile,

F. A halogen- or alkyl-substituted phenylurea,

G. A 2,6-dinitroaniline, and

H. A symmetrical triazine.

always provided that the composition does not contain more than 500 parts by weight of ingredient D, does not contain more than 1,000 parts of ingredient E, does not contain more than 2,000 parts by weight of ingredient G and does not contain more than 200 parts by weight of ingredient H.

The invention also includes a method of controlling the growth of dicotyledonous weeds by application of the aforesaid herbicidal composition.

## DESCRIPTION.

### HERBICIDAL COMPOSITIONS AND THE SELECTIVE CONTROL OF WEEDS IN CEREAL CROPS.

The present invention relates to herbicidal compositions and to a method of selectively controlling weeds in cereal crops such as wheat, barley, oats, rye, maize and rice, and in particular the control of dicotyledonous weeds in such cereal crops with no, or substantially no damage to the cereal crops themselves.

Various compounds have been suggested for the control of dicotyledonous weeds. We have now found that certain mixtures of compounds give unexpectedly good control of such weeds with no, or substantially no damage to the crops.

According to the present invention a herbicidal composition is provided characterised by a content of

A.   from 30 to 150 parts by weight of 2-methoxy-3,5-dichlorobenzoic acid or an inorganic or organic salt thereof,

B.   From 250 to 1,000 parts by weight of methyl 5(2,4-dichlorophenoxy)-2-nitrobenzoate,

and by a content of from 250 to 2500 parts by weight of one of the following ingredients or of a mixture of two or more of the following ingredients:

C. One or more 2-aryloxy alkanoic acids or inorganic or organic salts thereof,

D. 3,5-dichloropicolinic acid or an inorganic or organic salt thereof,

E. A halogenated hydroxy benzonitrile,

F. A halogen- or alkyl-substituted phenylurea,

G. A 2,6-dinitroaniline, and

H. A symmetrical triazine.

always provided that the composition does not contain more than 500 parts by weight of ingredient D, does not contain more than 1,000 parts of ingredient E, does not contain more than 2,000 parts by weight of ingredient G and does not contain more than 200 parts by weight of ingredient H.

The 2-aryloxy alkanoic acid ingredient C may, for example be (4-chloro-o-tolyloxy) acetic acid, (2,4-dichlorophenoxy) acetic acid, $\pm$ 2-(4-chloro-o-tolyloxy) propionic acid, or $\pm$ 2-(2,4-dichlorophenoxy) propionic acid.

The ingredient D is preferably present in an amount of from 30 - 150 parts by weight.

The halogenated hydroxy benzonitrile ingredient E may, for example, be 4-hydroxy-3,5-diodo-benzonitrile (e.g. 100 - 500 parts by weight) or 4-hydroxy-3,5-dibromo benzonitrile (e.g. 100 - 500 parts by weight).

The substituted phenyl urea ingredient F may, for example be 3-(4-isopropylphenyl)-1,1-dimethyl urea (e.g. 750 - 2500 parts by weight) or 3-(3-chloro-p-tolyl)-1,1-dimethyl urea (e.g. 750 - 2,500 parts by weight).

The 2,6-dinitroaniline ingredient G may, for example be $\underline{a},\underline{a},\underline{a}$-trifluoro-2,6-dinitro-N,N-dipropyl-p-toluidine (e.g. 300 - 1200 parts by weight) or N-(1-ethylpropyl)-2,6-dinitro-3,4-xylidine) e.g. 300 - 1,200 parts by weight).

The symmetrical triazine ingredient H may, for example be 2-chloro-4,6-bis(ethylamino)-1,3,5-triazine (e.g. 50 to 200 parts by weight) or 2-chloro-4-ethyl-amino-6-isopropylamino-1,3,5-triazine (e.g. 50 to 200 parts by weight).

Where the ingredients are normally free acids, they may also be used in the form of inorganic (e.g. a metal such as an alkali metal) or organic (e.g. dimethylamine) salts. The actual form chosen will depend on the other ingredients present and the physical form of the composition.

The compositions may include the conventional carrier materials such as bentonite (Wyoming), fumed silica (e.g. Cabosil) for solid phase systems, and water, ethylene glycol for liquid phase systems and conventional adjuvants such as sodium alginate, a bactericide, chelating agent and non-ionic surfactants used in herbicidal compositions. Any of the compositions can be formulated as flowable concentrates dispersible in water, the aqueous dispersion being applied to the crop by conventional techniques. Mixtures in which the active ingredients consist of A, B and one or more of F, G and H may be formulated as granules with a suitable carrier such as montmorillonite clay, diatomaceous earth, or fumed silica together with a wetting agent such as lignin sulphonate and non-ionic surfactants.

The amount of the compositon applied to the cereal crop should of course be herbicidally effective but not so much that any substantial damage to the cereal crop results. In general, the composition should be applied so as to provide a weight of grammes over each hectare of crops treated equal to the parts by weight specified above. The composition can be applied to the ground post emergence of the cereal crop.

Annual broadleaf weeds which are suppressed or killed (in cereal crops) by the composition of the invention include: Anthemis and Matricaria spp.; Galium aparine; Lamium spp.; Myosotis sp.; Polygonum spp.; Veronica spp.; Viola spp.; as well as susceptible species such as Capsella bursa-pastoris; Raphanus raphanistrum; Sinapis

spp.; Thlaspi arvense (Cruciferous weeds), Papaver spp.; and Ranunculus spp; also perennial broadleaf weeds including Cirsium arvense. Mixtures in which ingredient F, G or H are present can control annual or seedling grass weeds such as Poa spp.

The following compositions have been found effective in the control of dicotyledonous weeds in cereal crops, the parts being parts by weight and indicate the amount in grams applied to each hectare. For simplicity ingredients A and B defined hereinbefore will be designated by the letters A and B respectively.

1. 90 parts A (as dimethylamine salt) 600 parts B 1500 parts ± 2-(4-chloro-phenoxy)acetic acid
        as dimethylamine salt)

2. 60 parts A (as dimethylamine salt) 600 parts B 1500 parts ± 2-(4-chloro-phenoxy)acetic acid
        (as dimethylamine salt)

3. 60 parts A (as dimethylamine salt) 600 parts B 1500 parts ± 2-(4-chloro-phenoxy) acetic acid
        (as dimethylamine salt) 240 parts 4-hydroxy-3,5-diiodo-benzonitrile
        (as sodium salt)

4.  60 parts A (as dimethylamine salt) 600 parts B 150 parts 4-amino-3,5-dichloro-6-fluoro-2-
    pyridyloxyacetic acid 1200 parts 3-(4-isopropylphenyl)-1,1-dimethyl
    urea


5.  60 parts A (as dimethylamine salt) 400 parts B 100 parts 4-amino-3,5-dichloro-6-fluoro-2-
    pyridyloxyacetic acid 1000 parts 3-(4-isopropylphenyl)-1,1-dimethyl
    urea


The above compositions were made up and applied as aqueous dispersions.

It has been found that the amount required to effectively control the weeds in a cereal crop is considerably less for the compositions of the invention as compared to known commercial mixtures. This effect is illustrated by the following examples.

EXAMPLE I.

Four trials were carried out in the United Kingdom on 20 square metre plots, four plots being used for each treatment. The plots were arranged in randomized block layout in sites well infested with broadleaved weeds. Two compositions were used, ingredients A and B being designated by the letters A and B as above.

    i. (a) 96 parts A (as dimethylamine salt) (b) 563 parts B

        (c) 1388 parts $\pm$ 2-(4-chloro-o-tolyloxy) propionic acid (as the dimethyl-amine salt)

    ii. For comparison:

        (a) 750 parts B

        (b) 1850 parts $\pm$ 2-(4-chloro-o-tolyloxy) propionic acid (as the dimethylamine salt

Each composition was applied as the conventional aqueous dispersion (using the same adjuvants and surfactants etc. in each composition) in an amount to provide the specified parts in grams per hectare. The treatments were effected once to emerged weeds when the cereal crop was at the growing stage known as Zadoks 30-31 (end of tillering) and the treatment effects both on crop and weeds recorded, the crops being taken to yield. The results are set out in Table I below. It is seen that despite the lower amounts of ingredients (b) and (c) in composition (i) of the invention, the effectiveness increased by the presence of a small amount of ingredient (a). The additive total for composition (i) was 2047 gm per hectare whereas that for comparative composition (ii) was 2600 gm per hectare with poorer results. The percentages quoted in the Table I are averages for the four trials - two on wheat and two on barley.

## TABLE I.

PERCENTAGE WEED CONTROL

| WEED TYPE | Composition (i) | Composition (ii) |
|---|---|---|
| 1 Shepherd's Purse (Capsella bursa-pastoris) | 85% | 83% |
| 2 Mayweed (Matricaria Matricarioides) | 57% (68) | 42% |
| 3 Forget-me-not (Myosotis arvenis) | 70% | 78% |
| 4 Poppy (Papaver rhoeas) | 95% | 92% |
| 5 Charlock (Sinapis arvenis) | 98% | 96% |
| 6 Chickweed (Stellaria media) | 88% | 83% |
| 7 Common Speedwell (Veronica persica) | 98% | 92% |
| 8 Fingered Speedwell (Veronica triphyllos) | 90% | 92% |
| 9 Field Pansy (Viola arvensis) | 95% | 93% |

EXAMPLE 2

A similar series of trials were carried out to that described in Example I, the total number of trials being six and the geographical location in France. Three trials were with winter wheat and three with winter barley, the trials being conducted with the same procedure as in Example I. The results are set out in Table II from which the same conclusion can be drawn as from the results in Table I.

## TABLE II.

| WEED TYPE | PERCENTAGE WEED CONTROL | |
| --- | --- | --- |
| | Composition (i) | Composition (ii) |
| 1 Fumatory (Fumaria officinalis) | 98% | 98% |
| 2 Mayweed (Matricaria spp.) | 90% | 78% |
| 3 Poppy (Papaver spp.) | 98% | 98% |
| 4 Wild Buckwheat (Polygonum convolvulus) | 98% | 98% |
| 5 Buttercup (Ranunculus sardous) | 92% | 87% |
| 6 Chickweed (Stellaria media) | 98% | 98% |
| 7 Ivyleaf Speedwell (Veronica hederifolia) | 97% | 96% |
| 8 Common speedwell (Veronica persica) | 98% | 98% |
| 9 Wild Violet (Viola tricolor) | 92% | 91% |

EXAMPLE 3.

Seven trials were carried out in the United Kingdom on 20 square metre plots, four plots being used for each treatment except one trial in which only three plots were used. The plots were arranged in randomised block layout in sites well infested with broadleaved weeds. Three compositions were used, ingredients A and B being designated by the letters A and B as above.

    (i)   (a) 96 parts A (as dimethylamine salt) (b) 563 parts B

         (c) 1388 parts $\pm$ 2-(4-chloro-o-tolyloxy) propionic acid (as the dimethyl-amine salt).

    (ii)  (a) 96 parts A (as dimethylamine salt) (b) 750 parts B

         (c) 1850 parts $\pm$ 2-(4-chloro-o-tolyloxy) propionic acid (as the dimethyl-amine salt).

    (iii) (a) 750 parts B

         (b) 1850 parts $\pm$ 2-(4-chloro-o-tolyloxy) propionic acid (as the dimethyl-amine salt)

Four trials were with winter wheat and three trials were with winter barley, the trials being conducted with the same procedure as in Example I. The results are set out in Table III from which the same conclusion can be drawn as from the results in Table I. The percentages quoted in Table III are averages for the seven trials.

# TABLE III

## PERCENTAGE WEED CONTROL

| | COMPOSITION (I) | COMPOSITION (II) | COMPOSITION (III) |
|---|---|---|---|
| 1. MAYWEED - SCENTLESS (Tripleurospermum maritimum) | 92% | 94% | 85% |
| 2. POPPY (Papaver rhoeus) | 98% | 98% | 97% |
| 3. CHICKWEED (Stellaria media) | 92% | 93% | ·89% |
| 4. COMMON SPEEDWELL (Veronica persica) | 97% | 92% | 86% |
| 5. IVY-LEAVED SPEEDWELL (Veronica hederifolia) | 85% | 86% | 88% |
| 6. CLEAVERS (Galium aparine) | 81% | 84% | 64% |
| 7. FORGET-ME-NOT (Myosotis scorpioides) | 82% | 91% | 70% |
| 8. GROUNDSEL (Senecio vulgaris) | 84% | 89% | 82% |
| 9. DOCK (Rumex spp.) | 95% | 95% | 75% |

-13-

0152216

EXAMPLE 4.

Six trials were carried out in France on 20 square metre plots, four plots being used for each treatment. The plots were arranged in randomised block layout on sites infested with broad-leaved weeds. Three trials were with winter wheat and three with winter barley. The trials were carried out with the same procedure as in Example I using the same compositions as in Example 3. The results are set out in Table IV from which the same conclusions can be drawn as from the results in Table I.

TABLE IV.

PERCENTAGE WEED CONTROL

| | COMPOSITION (I) | COMPOSITION (II) | COMPOSITION (III) |
|---|---|---|---|
| 1. MAYWEED (Matricaria spp.) | 60% | 53% | 50% |
| 2. CHICKWEED (Stellaria media) | 82% | 90% | 78% |
| 3. COMMON SPEEDWELL (Veronica persica) | 84% | 88% | 84% |
| 4. CLEAVERS (Galium aparine) | 33% | 45% | 25% |

EXAMPLE 5.

Four trials were carried out in Germany on 24 square metre plots, four plots being used for each treatment. The plots were arranged in randomised block layout on sites infested with broad-leaved weeds. Two trials were with winter wheat and two with winter barley. The trials were carried out using the same procedure as in Example I but using the compositions as in Example 3. The results are set out in Table V from which the same conclusions can be drawn as from the results in Table I.

TABLE V.

PERCENTAGE WEED CONTROL

| | COMPOSITION (I) | COMPOSITION (II) | COMPOSITION (III) |
|---|---|---|---|
| 1. MAYWEED - SCENTED (Matricaria inodora) | 92% | 95% | 89% |
| 2. SHEPHERD'S PURSE (Capsella burse-pastoris) | 100% | 100% | 100% |
| 3. CHICKWEED (Stellaria media) | 96% | 95% | 90% |
| 4. COMMON SPEEDWELL (Veronica persica) | 96% | 95% | 90% |
| 5. FIELD PANSY (Viola arvensis) | 81% | 87% | 82% |
| 6. CLEAVERS (Galium sparine) | 94% | 94% | 94% |
| 7. CORN FLOWER (Centaurea cyanus) | 90% | 95% | 95% |
| 8. RED DEAD-NETTLE (Lamium purpureum) | 80% | 85% | 88% |

## CLAIMS

1. A herbicidal composition is provided characterised by a content of

A. from 30 to 150 parts by weight of 2-methoxy-3,5-dichlorobenzoic acid or an inorganic or organic salt thereof,

B. From 250 to 1,000 parts by weight of methyl 5(2,4-dichlorophenoxy)-2-nitrobenzoate,

and by a content of from 250 to 2500 parts by weight of one of the following ingredients or of a mixture of two or more of the following ingredients:

C. One or more 2-aryloxy alkanoic acids or inorganic or organic salts thereof,

D. 3,5-dichloropicolinic acid or an inorganic or organic salt thereof,

E. A halogenated hydroxy benzonitrile,

F. A halogen- or alkyl-substituted phenylurea,

G. A 2,6-dinitroaniline, and

H. A symmetrical triazine.

always provided that the composition does not contain more than 500 parts by weight of ingredient D, does not contain more than 1,000 parts of ingredient E, does not contain more than 2,000 parts by weight of ingredient G and does not contain more than 200 parts by weight of ingredient H.

2. A herbicidal composition as claimed in claim 1, characterised by a content of from 30 to 150 parts by weight of ingredient D.

3. A herbicidal composition as claimed in claim 1 or 2, characterised by a content of from 100 to 500 parts by weight of ingredient E.

4. A herbicidal composition as claimed in claim 1, 2 or 3, characterised by a content of from 300 to 1,200 parts by weight of ingredient G.

5. A herbicidal composition as claimed in any of claims 1 to 4, characterised by a content of from 50 to 200 parts by weight of ingredient H.

6. A herbicidal composition as claimed in any of the preceding claims, characterised in that any inorganic salt used as ingredient A, C or D is an alkali metal salt.

7. A herbicidal composition as claimed in any of the preceding claims, characterised in that any organic salt used as ingredient A, C or D is a dimethylamine salt.

8. A method of controlling the growth of dicotyledonous weeds during the growing of cereal crops, characterised by applying to the crop a composition claimed in any of claims 1 to 7.

9. A method as claimed in claim 8, characterised in that the composition is applied in an amount to provide the stated parts by weight in grams of each ingredient for each hectare treated.

10. A method as claimed in claim 8 or 9, characterised in that the composition is applied as an aqueous dispersion.